# EUROPEAN PATENT APPLICATION

(11) **EP 3 135 366 A1**
(43) Date of publication of application: **01.03.2017**
(21) Application number: 15782345.1
(22) Date of filing: 15.04.2015
(51) Int. Cl.: B01D 61/02

(54) **REVERSE OSMOSIS MEMBRANE FILTER HAVING FLUID CHANNEL FORMED ON SIDE SURFACE THEREOF**

(30) Priority: 21.04.2014 KR 20140047615
(71) Applicant: Picogram Co., Ltd., Bucheon-si, Gyeonggi-do 421-808 (KR)
(72) Inventor: HUR, Ju Song, Incheon 402-836 (KR); LIM, Sung Taek, Gimpo-si Gyeonggi-do 415-783 (KR); HONG, Hyun Ki, Incheon 403-819 (KR); CHUNG, Tae Ho, Seoul 151-875 (KR); CHOI, Sue Hyun, Seoul 157-915 (KR)
(74) Representative: Dr. Gassner & Partner mbB
(86) International application number: PCT/KR2015/003754
(87) International publication number: WO 2015/163631

(57) **Abstract**

Disclosed is a reverse osmosis membrane filter for increasing a recovery rate of purified water by extending a residence time of raw water on a reverse osmosis sheet. The reverse osmosis membrane filter having a fluid channel formed on a side surface thereof, according to the present invention, comprises: a central tube having a purified water inflow hole radially formed therein into which purified water is introduced; a guide tube that is coupled to the outside of the central tube and has a raw water moving passage formed in the longitudinal direction thereof and a raw water outflow hole radially formed therein which communicates with the raw water moving passage; a reverse osmosis membrane sheet that filters a foreign substance contained in raw water by allowing the raw water to flow in the longitudinal direction in order to extend a residence time of the raw water passing through the raw water outflow hole and supplies the filtered purified water into the central tube through the purified water inflow hole; and a filter housing that accommodates the reverse osmosis membrane sheet.

## Description

### TECHNICAL FIELD

The present disclosure relates to a reverse osmosis (RO) membrane filter, and more particularly, to such a reverse osmosis (RO) membrane filter having a flow channel formed on a side surface thereof, which can extend the residence time of raw water in a reverse osmosis membrane sheet to increase the recovery rate of purified water.

### BACKGROUND ART

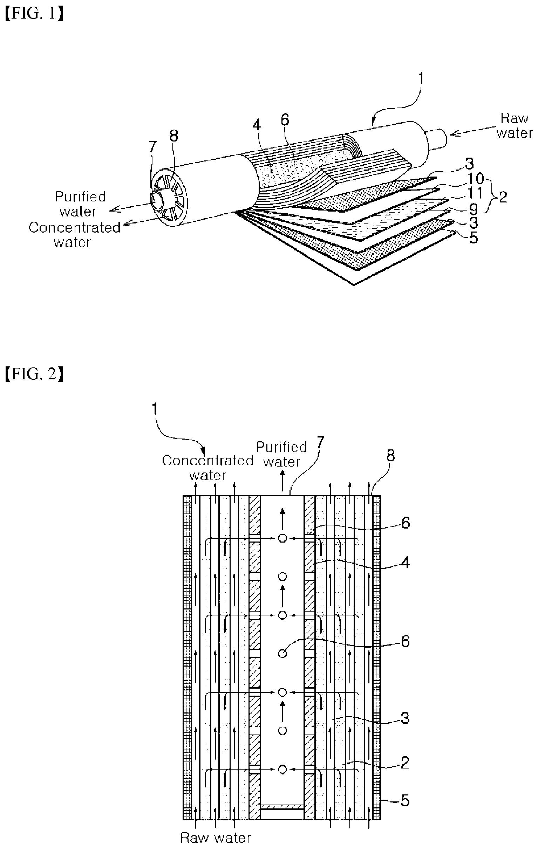

As show FIGs. 1 and 2, a reverse osmosis (RO) membrane filter 1 is implemented as a spiral wound type module in which various kinds of membranes are spirally wound around a central tube 4. The reverse osmosis membrane filter 1 includes: a filtering member 2; a pair of opposed inner and outer raw water spacers 3 that is respectively disposed on both sides of the filtering member 2, the filtering member 2 and the raw water spacers 3 being spirally wound around the central tube 4; and an outer membrane 5 that is made of a non-woven fabric and surrounds the outer circumferential surface of the reverse osmosis membrane filter 1 to maintain the shape of the reverse osmosis membrane filter 1.

In raw water introduced into the reverse osmosis member filter 1 through the inner or outer raw water spacer 3, purified water which has been filtered while passing through the surface of the filtering member 2 is fed toward the center of the filtering member 2 and then is discharged to the outside through a purified water outlet port 7 formed at one side of the central tube 4 through a plurality of through-holes 6 formed in the central tube 4. In addition, in the raw water introduced into the reverse osmosis member filter 1 through the inner or outer raw water spacer 3, concentrated water which has been concentrated while not passing through the surface of the filtering member 2 continues to be moved in the reverse osmosis member filter 1 through the inner or outer raw water spacer 3 and then is discharged to the outside through a plurality of concentrated water outlet ports 8 radially formed around the purified water outlet port 7 of the central tube 4.

In this case, the filtering member 2 has a structure in which a purified water spacer 11 is installed between a first membrane 9 and a second membrane 10 so that the purified water which has passed through the first membrane 9 or the second membrane 10 is gradually fed to the central tube 4 side along the purified water spacer 11 and then is discharged to the outside through the through-holes 6 formed in the central tube 4. In this case, either the first membrane 9 or the second membrane 10 is generally formed as a reverse osmosis membrane, but both the first membrane 9 and the second membrane 10 may be formed as the reverse osmosis membranes.

The reverse osmosis membrane filter 1 is formed as a reverse osmosis membrane having a pore size of 0.0001 microns, and thus it is used to filter heavy metals such as lead and arsenic, sodium, various kinds of pathogens. In addition, as the raw water is fed in a transverse direction of the reverse osmosis membrane sheet, the residence time of the raw water which comes into close contact with the surface of the reverse osmosis membrane sheet is shortened.

As a consequence, the amount of the purified water discharged to the outside through the purified water outlet port 7 is relatively small compared to the amount of the raw water introduced into the reverse osmosis membrane filter 1 through the inner or outer raw water spacer 3. In other words, the ratio of the amount of the purified water discharged to the amount of the raw water introduced is generally 3:1. Thus, the recovery rate of the purified water is disadvantageously very low.

A spiral wound type reverse osmosis membrane is disclosed in Korean Patent Application No. 10-2011-7006005.

### DISCLOSURE

### TECHNICAL PROBLEM

Accordingly, the present disclosure has been made to solve the aforementioned problems occurring in the prior art, and it is an object of the present disclosure to provide a reverse osmosis (RO) membrane filter having a flow channel formed on a side surface thereof, which can extend the residence time of raw water in a reverse osmosis membrane sheet by allowing the raw water to flow in a longitudinal direction of the reverse osmosis membrane sheet, thus leading to an increase in the throughput of purified water.

Another object of the present disclosure is to provide a reverse osmosis (RO) membrane filter having a flow channel formed on a side surface thereof, in which a central tube through which purified water is fed and a guide tube into which raw water is introduced are formed integrally with each other, thus leading to a simplification of the structure of the filter.

### TECHNICAL SOLUTION

To achieve the above and other objects, in accordance with one embodiment of the present disclosure, there is provided an reverse osmosis (RO) membrane filter having a flow channel formed on a side surface thereof, the filter including:
a central tube including one of more purified water inflow holes radially formed therein to allow purified water to be introduced into the central tube through the purified water inflow holes, the central tube being closed at one end thereof;
a guide tube coupled to an outer portion of the central tube, the guide tube including a raw water feed passage formed in the longitudinal direction thereof and one or more raw water outflow holes radially formed therein so as to fluidically communicate with the raw water feed passage;
a reverse osmosis membrane sheet configured to filter a foreign substance contained in raw water by allowing the raw water to flow in the longitudinal direction thereof in order to extend the residence time of the raw water passing through the raw water outflow holes, and configured to allow the filtered and purified water to be supplied to the inside of the central tube through the purified water inflow holes;
a filter housing configured to accommodate the reverse osmosis membrane sheet therein; and
a flow channel conversion guide coupled to an opening of the filter housing, the flow channel conversion guide including a raw water inlet port formed therein to allow the raw water to be introduced into the guide tube through the raw water inlet port, a purified water outlet port formed therein to allow the purified water to be discharged to the outside from the central tube through the purified water outlet port, and a concentrated water outlet port formed therein to allow concentrated water filtered by the reverse osmosis membrane sheet to be discharged to the outside through the concentrated water outlet port.

To achieve the above and other objects, in accordance with another embodiment of the present disclosure, there is provided an reverse osmosis (RO) membrane filter having a flow channel formed on a side surface thereof, the filter including:
a central tube including one or more purified water inflow holes radially formed therein to allow purified water to be introduced into the central tube through the purified water inflow holes, the central tube being closed at one end thereof;
a guide tube coupled to an outer portion of the central tube and including one or more ribs radially protrudingly formed on the outer circumferential surface thereof in the longitudinal direction thereof so as to be spaced apart from each other at regular intervals in order to define a raw water feed passage;
a reverse osmosis membrane sheet configured to filter a foreign substance contained in raw water by allowing the raw water to flow in the longitudinal direction thereof in order to extend the residence time of the raw water passing through the raw water outflow holes, and configured to allow the filtered and purified water to be supplied to the inside of the central tube through the purified water inflow holes;
a filter housing configured to accommodate the reverse osmosis membrane sheet therein; and
a flow channel conversion guide coupled to an opening of the filter housing, the flow channel conversion guide including a raw water inlet port formed therein to allow the raw water to be introduced into the guide tube through the raw water inlet port, a purified water outlet port formed therein to allow the purified water to be discharged to the outside from the central tube through the purified water outlet port, and a concentrated water outlet port formed therein to allow concentrated water filtered by the reverse osmosis membrane sheet to be discharged to the outside through the concentrated water outlet port.

To achieve the above and other objects, in accordance with still another embodiment of the present disclosure, there is provided an reverse osmosis (RO) membrane filter having a flow channel formed on a side surface thereof, the filter including:
a central tube including one or more purified water inflow holes radially formed therein to allow purified water to be introduced into the central tube through the purified water inflow holes, the central tube being closed at one end thereof;
a guide tube coupled to an outer portion of the central tube, the guide tube including a raw water feed passage formed in the longitudinal direction thereof and one or more raw water outflow holes radially formed therein so as to fluidically communicate with the raw water feed passage;
a reverse osmosis membrane sheet configured to filter a foreign substance contained in raw water by allowing the raw water to flow in the longitudinal direction thereof in order to extend the residence time of the raw water passing through the raw water outflow holes, and configured to allow the filtered and purified water to be supplied to the inside of the central tube through the purified water inflow holes; and
a filter housing including a raw water inlet port formed at an upper portion thereof to allow the raw water such as tap water to be introduced into the guide tube through the raw water inlet port, a purified water outlet port formed at the upper portion thereof to allow the purified water subjected to a purification treatment by the reverse osmosis membrane sheet to be discharged to the outside from the central tube through the purified water outlet port, and a concentrated water outlet port formed at the upper portion thereof to allow concentrated water filtered by the reverse osmosis membrane sheet to be discharged to the outside through the concentrated water outlet port, the filter housing being configured to accommodate the reverse osmosis membrane sheet therein.

In accordance with a preferred embodiment, the central tube may be disposed at the center or peripheral portion of the reverse osmosis membrane sheet in the longitudinal direction of the reverse osmosis membrane sheet.

Preferably, the central tube and the guide tube may be formed integrally with each other.

The reverse osmosis membrane sheet may include:
an upper holder mounted at an upper end thereof and configured to prevent the raw water introduced into the upper end of the reverse osmosis membrane sheet after passing through the raw water inlet port and the concentrated water fed from the reverse osmosis membrane sheet to the concentrated water outlet port from being mixed with each other; and
a lower holder mounted at a lower end thereof and configured to prevent the raw water introduced into the lower end of the reverse osmosis membrane sheet after passing through a lower end of the guide tube and the concentrated water discharged from the reverse osmosis membrane sheet from being mixed with each other.

### ADVANTAGEOUS EFFECT

In accordance with the reverse osmosis (RO) membrane filter of the present disclosure as constructed above, the raw water flows in a longitudinal direction of the reverse osmosis membrane sheet so that the residence time of raw water in a reverse osmosis membrane sheet can be extended to increase the throughput of purified water, thereby improving practical applicability and reliability. In addition, the throughput of purified water can be increased even without changing the diameter size of a reverse osmosis membrane cartridge and a filter housing accommodating the cartridge, thereby ensuring practical applicability.

Further, the central tube through which the purified water is fed and the guide tube into which the raw water is introduced are formed integrally with each other, thus leading to a simplification of the structure of the filter.

### BRIEF DESCRIPTION OF THE DRAWINGS

The above objects, other features and advantages of the present disclosure will become more apparent by describing the preferred embodiments thereof with reference to the accompanying drawings, in which:
FIGs. 1 and 2 are schematic perspective and longitudinal cross-sectional views showing a reverse osmosis (RO) membrane filter in accordance with the prior art;
FIG. 3 is a schematic longitudinal cross-sectional view showing a filter housing that accommodates a reverse osmosis membrane sheet of a reverse osmosis (RO) membrane filter having a flow channel formed on a side surface thereof in accordance with one embodiment of the present disclosure;
FIG. 4 shows a side view and a transverse cross-sectional view of the RO membrane filter shown in FIG. 3;
FIGs. 5a and 5b are views showing a water-purification treatment of raw water by the RO membrane filter shown in FIG. 3;
FIG. 6 is a schematic longitudinal cross-sectional view showing a filter housing that accommodates a reverse osmosis membrane sheet of a reverse osmosis (RO) membrane filter having a flow channel formed on a side surface thereof in accordance with another embodiment of the present disclosure;
FIG. 7 is shows a side view and a transverse cross-sectional view of the RO membrane filter shown in FIG. 6; and
FIG. 8 is a schematic longitudinal cross-sectional view showing a filter housing that accommodates a reverse osmosis membrane sheet of a reverse osmosis (RO) membrane filter having a flow channel formed on a side surface thereof in accordance with still another embodiment of the present disclosure.

### ** Explanation on reference numerals of main elements in the drawings **

50: purified water inflow hole
51: central tube
52: raw water feed passage
53: raw water outflow hole
54: guide tube
55: reverse osmosis membrane sheet
56: filter housing
57: raw water inlet port
58: purified water outlet port
59: concentrated water outlet port
60; flow channel conversion guide
61: ribs

### PREFERRED EMBODIMENTS OF THE INVENTION

Hereinafter, the preferred embodiments of the present disclosure will be described in detail with reference to the accompanying drawings. However, the embodiments are for illustrative purposes only and are not intended to limit the scope of the invention. For the sake of a clearer understanding of the present disclosure, the thickness of lines or the size of constituent elements shown in the drawings may be illustrated exaggeratingly for the clarity and convenience of description.

Hereinafter, a reverse osmosis (RO) membrane filter having a flow channel formed on a side surface thereof in accordance with the preferred embodiments of the present disclosure will be described in detail with reference to the accompanying drawings.

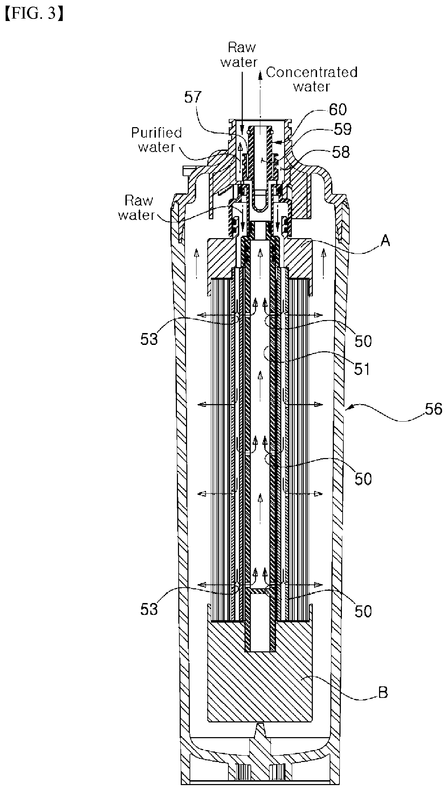

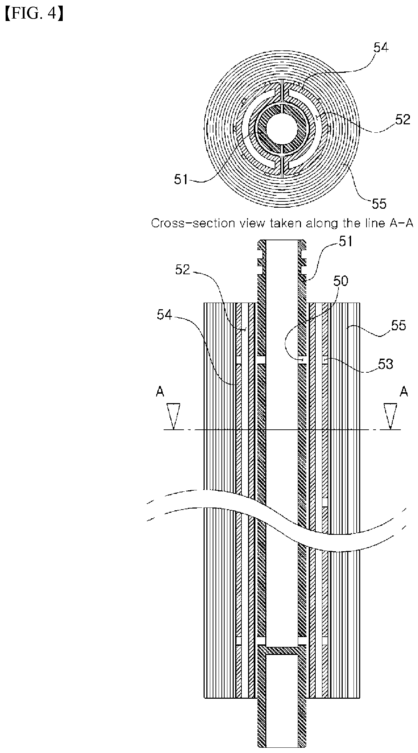

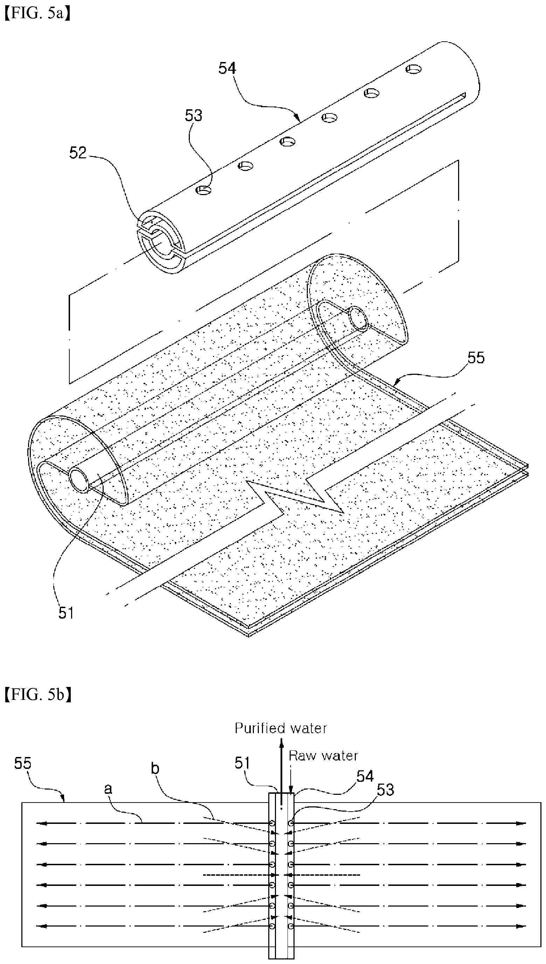

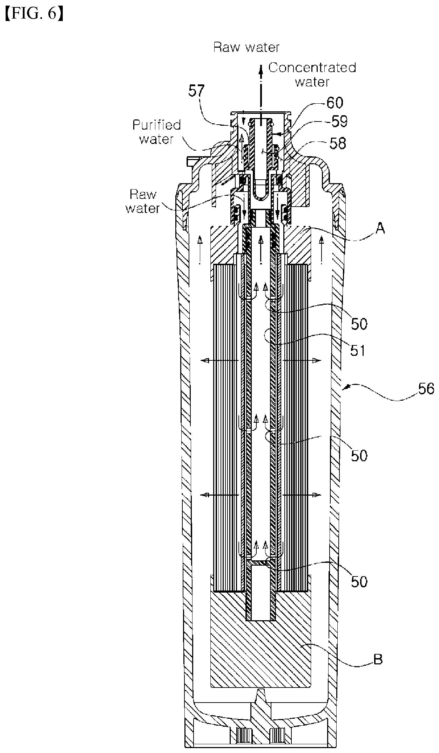

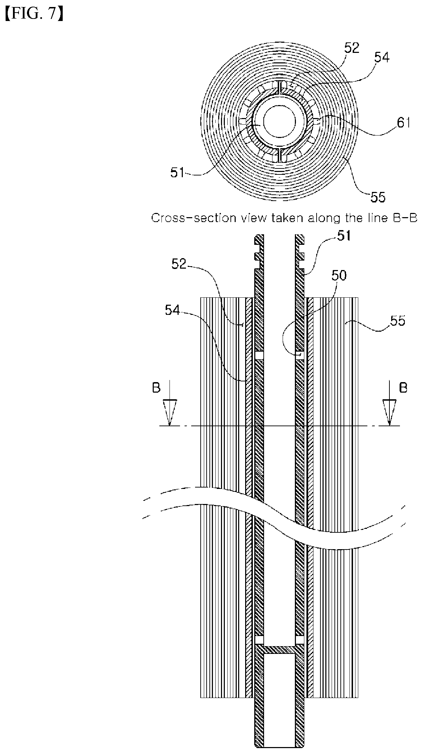

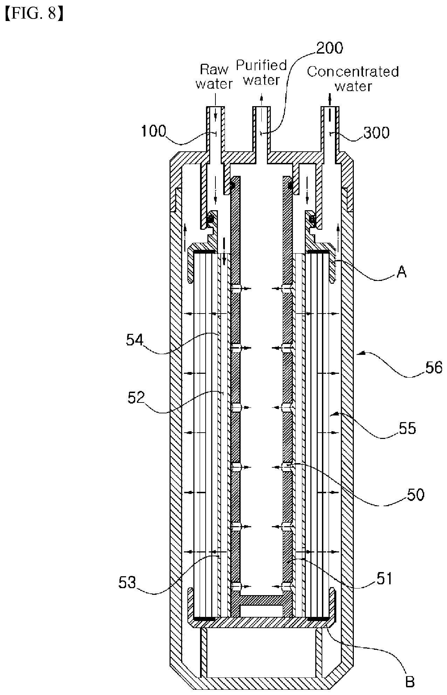

FIG. 3 is a schematic longitudinal cross-sectional view showing a filter housing that accommodates a reverse osmosis membrane sheet of a reverse osmosis (RO) membrane filter having a flow channel formed on a side surface thereof in accordance with one embodiment of the present disclosure, FIG. 4 shows a side view and a transverse cross-sectional view of the RO membrane filter shown in FIG. 3, FIGs. 5a and 5b are views showing a water-purification treatment of raw water by the RO membrane filter shown in FIG. 3, FIG. 6 is a schematic longitudinal cross-sectional view showing a filter housing that accommodates a reverse osmosis membrane sheet of a reverse osmosis (RO) membrane filter having a flow channel formed on a side surface thereof in accordance with another embodiment of the present disclosure, FIG. 7 is shows a side view and a transverse cross-sectional view of the RO membrane filter shown in FIG. 6, and FIG. 8 is a schematic longitudinal cross-sectional view showing a filter housing that accommodates a reverse osmosis membrane sheet of a reverse osmosis (RO) membrane filter having a flow channel formed on a side surface thereof in accordance with still another embodiment of the present disclosure.

Referring to FIGs. 3 to 5(a) and 5(b), a reverse osmosis (RO) membrane filter having a flow channel formed on a side surface thereof in accordance with one embodiment of the present disclosure includes:
a central tube 51 that includes a plurality of purified water inflow holes 50 radially formed therein to allow purified water to be introduced into the central tube through the purified water inflow holes, the central tube being closed at one end thereof;
a guide tube 54 that is coupled to an outer portion of the central tube 51, the guide tube including a raw water feed passage 52 formed in the longitudinal direction thereof and a plurality of raw water outflow holes 53 radially formed therein so as to fluidically communicate with the raw water feed passage 52;
a reverse osmosis membrane sheet 55 that is configured to filter a foreign substance contained in raw water by allowing the raw water to flow in the longitudinal direction thereof in order to extend the residence time of the raw water passing through the raw water outflow holes 53, and is configured to allow the filtered and purified water to be supplied to the inside of the central tube 51 through the purified water inflow holes 50;
a filter housing 56 that is configured to accommodate the reverse osmosis membrane sheet 55 therein; and
a flow channel conversion guide 60 that is coupled to an opening of the filter housing 56, the flow channel conversion guide including a raw water inlet port 57 formed therein to allow the raw water to be introduced into the guide tube through the raw water inlet port, a purified water outlet port 58 formed therein to allow the purified water to be discharged to the outside from the central tube 55 through the purified water outlet port, and a concentrated water outlet port 59 formed therein to allow concentrated water (i.e., waste water) filtered by the reverse osmosis membrane sheet 55 to be discharged to the outside through the concentrated water outlet port.

In this case, the central tube 51 is disposed at the center or peripheral portion of the reverse osmosis membrane sheet 55 in the longitudinal direction of the reverse osmosis membrane sheet 55.

In addition, the central tube 51 and the guide tube 54 are formed integrally with each other.

The reverse osmosis membrane sheet 55 includes:
an upper holder A that is mounted at an upper end thereof and is configured to prevent the raw water introduced into the upper end of the reverse osmosis membrane sheet 55 through the raw water inlet port 100 and the concentrated water fed from the reverse osmosis membrane sheet 55 to the concentrated water outlet port 300 from being mixed with each other; and
a lower holder B that is mounted at a lower end thereof and is configured to prevent the raw water introduced into the lower end of the reverse osmosis membrane sheet 55 after passing through a lower end of the guide tube 54 and the concentrated water discharged from the reverse osmosis membrane sheet 55 from being mixed with each other.

Hereinafter, a use example of reverse osmosis (RO) membrane filter having a flow channel formed on a side surface thereof in accordance with one embodiment of the present disclosure will be described in detail with reference to the accompanying drawings.

As shown in FIGs. 3 to 5a and 5b, raw water (i.e., tap water) supplied from a raw water supply source is introduced into the raw water inlet port 57 through a connector (not shown) coupled to the flow channel conversion guide 60 and then is introduced into the inside of the filter hosing 56.

The raw water introduced into the raw water inlet port 57 flows into the raw water feed passage 52 of the guide tube 54 coupled to an outer portion of the central tube 51, and then flows out toward the reverse osmosis membrane sheet 55 through the raw water outflow holes 53 radially formed in the guide tube 54 so as to fluidically communicate with the raw water feed passage 52. In this case, the position, the number, and the size of the raw water outflow holes 53 of the guide tube 54 may be changed depending on the properties of the RO membrane filter so that the raw water can be constantly and uniformly supplied to the reverse osmosis membrane sheet 55.

The raw water flowing into the reverse osmosis membrane sheet 55 flows along the longitudinal direction (i.e., a direction indicated by an arrow "a in FIG. 5b) of the reverse osmosis membrane sheet 55 while coming into close contact with the membrane surface of the reverse osmosis membrane sheet 55. The raw water passes through the RO membrane while contacting with the reverse osmosis membrane sheet 55 and as a result, a foreign substance is filtered from the raw water which has passed through the reverse osmosis membrane sheet 55 to obtain purified water which is in turn introduced into the central tube 51 through the purified water inflow holes 50 radially formed in the central tube 51 and is collected in the central tube 51 in a direction indicated by an arrow "b" in FIG. 5b.

In this case, the raw water contacting with the membrane surface of the reverse osmosis membrane sheet 55 flows along the longitudinal direction of the reverse osmosis membrane sheet 55, and thus the residence time of the raw water in the reverse osmosis membrane sheet 55 is extended (i.e., the entire membrane of the reverse osmosis membrane sheet 55 defines a flow channel along which the raw water is fed). Accordingly, the recovery rate of the purified water filtered by the reverse osmosis membrane sheet 55 can be increased.

The purified water collected in the central tube 51 is discharged to the outside through the purified water outlet port 58 of the flow channel conversion guide 60 and the connector.

On the other hand, concentrated water which has not passed through the membrane of the reverse osmosis membrane sheet 55 is fed toward the filter housing 56 in the radial direction of the reverse osmosis membrane sheet 55, and then is drained to a designated place through a hose (not shown) connected to the concentrated water outlet port 59 of the flow channel conversion guide 60.

As described above, a configuration of the flow channel conversion guide60 in which the raw water introduced into the raw water inlet port 57 through the connector flows into the reverse osmosis membrane sheet 55, the purified water subjected to a water purification treatment by the reverse osmosis membrane sheet 55 is discharged to a connector through the purified water outlet port 58, and the concentrated water filtered by the reverse osmosis membrane sheet 55 is discharged to the outside of the filter housing 56 through the concentrated water outlet port 59 is well-known in the art, and thus a detailed description thereof will be omitted to avoid redundancy.

Referring to FIGs. 6 and 7, a reverse osmosis (RO) membrane filter having a flow channel formed on a side surface thereof in accordance with another embodiment of the present disclosure includes:
a central tube 51 that includes a plurality of purified water inflow holes 50 radially formed therein to allow purified water to be introduced into the central tube through the purified water inflow holes, the central tube being closed at one end thereof;
a guide tube 54 that is coupled to an outer portion of the central tube 51 and including a plurality of ribs 61 radially protrudingly formed on the outer circumferential surface thereof in the longitudinal direction thereof so as to be spaced apart from each other at regular intervals in order to define a raw water feed passage 52;
a reverse osmosis membrane sheet 55 that is configured to filter a foreign substance contained in raw water by allowing the raw water to flow in the longitudinal direction thereof in order to extend the residence time of the raw water passing through the raw water outflow holes 53, and is configured to allow the filtered and purified water to be supplied to the inside of the central tube 51 through the purified water inflow holes 50;
a filter housing 56 that is configured to accommodate the reverse osmosis membrane sheet 55 therein; and
a flow channel conversion guide 60 that is coupled to an opening of the filter housing 56, the flow channel conversion guide including a raw water inlet port 57 formed therein to allow the raw water to be introduced into the guide tube through the raw water inlet port, a purified water outlet port 58 formed therein to allow the purified water to be discharged to the outside from the central tube 55 through the purified water outlet port, and a concentrated water outlet port 59 formed therein to allow concentrated water (i.e., waste water) filtered by the reverse osmosis membrane sheet 55 to be discharged to the outside through the concentrated water outlet port.

Hereinafter, a use example of reverse osmosis (RO) membrane filter having a flow channel formed on a side surface thereof in accordance with another embodiment of the present disclosure will be described in detail with reference to the accompanying drawings.

As shown in FIGs. 6 and 7, raw water (i.e., tap water) supplied from a raw water supply source is introduced into the raw water inlet port 57 through a connector (not shown) coupled to the flow channel conversion guide 60 and then is introduced into the inside of the filter hosing 56.

The raw water introduced into the raw water inlet port 57 is introduced into the raw water feed passage 52 defined by ribs 61 protrudingly formed longitudinally on the outer circumferential surface of the guide tube 54 coupled to the outer portion of the central tube 51.

The raw water introduced into the raw water feed passage 52 of the guide tube 54 flows out toward the reverse osmosis membrane sheet 55, and then flows along the longitudinal direction of the reverse osmosis membrane sheet 55 while coming into close contact with the membrane surface of the reverse osmosis membrane sheet 55. The raw water passes through the RO membrane while contacting with the reverse osmosis membrane sheet 55 and as a result, a foreign substance is filtered from the raw water which has passed through the reverse osmosis membrane sheet 55 to obtain purified water which is in turn introduced into the central tube 51 through the purified water inflow holes 50 of the central tube 51 and is collected in the central tube 51. The purified water collected in the central tube 51 is discharged to the outside through the purified water outlet port 58 of the flow channel conversion guide 60 and the connector.

On the other hand, concentrated water which has not passed through the membrane of the reverse osmosis membrane sheet 55 is fed toward the filter housing 56 in the radial direction of the reverse osmosis membrane sheet 55, and then is drained to a designated place through a hose (not shown) connected to the concentrated water outlet port 59 of the flow channel conversion guide 60.

In this case, a configuration in which the residence time of the raw water contacting with the membrane surface of the reverse osmosis membrane sheet 55 is extended by allowing the raw water passing through the raw water inlet port 57 of the flow channel conversion guide 60 to be flow along the membrane surface of the reverse osmosis membrane sheet 55 in the longitudinal direction of the reverse osmosis membrane sheet 55, thereby increasing the recovery rate of the purified water is the same as that shown in FIG. 5, and thus a detailed description thereof will be omitted to avoid redundancy.

Referring to FIG. 8, a reverse osmosis (RO) membrane filter having a flow channel formed on a side surface thereof in accordance with still another embodiment of the present disclosure includes:
a central tube 51 that includes a plurality of purified water inflow holes 50 radially formed therein to allow purified water to be introduced into the central tube through the purified water inflow holes, the central tube being closed at one end thereof;
a guide tube 54 that is coupled to an outer portion of the central tube 51, the guide tube including a raw water feed passage 52 formed in the longitudinal direction thereof and a plurality of raw water outflow holes 53 radially formed therein so as to fluidically communicate with the raw water feed passage 52;
a reverse osmosis membrane sheet 55 that is configured to filter a foreign substance contained in raw water by allowing the raw water to flow in the longitudinal direction thereof in order to extend the residence time of the raw water passing through the raw water outflow holes 53, and is configured to allow the filtered and purified water to be supplied to the inside of the central tube 51 through the purified water inflow holes 50; and
a filter housing 56 that includes a raw water inlet port 100 formed at an upper portion thereof to allow the raw water such as tap water to be introduced into the guide tube through the raw water inlet port, a purified water outlet port 200 formed at the upper portion thereof to allow the purified water subjected to a purification treatment by the reverse osmosis membrane sheet 55 to be discharged to the outside from the central tube 55 through the purified water outlet port, and a concentrated water outlet port 59 formed at the upper portion thereof to allow concentrated water filtered by the reverse osmosis membrane sheet 55 to be discharged to the outside through the concentrated water outlet port, the filter housing being configured to accommodate the reverse osmosis membrane sheet 55 therein.

In this case, the configuration of the reverse osmosis (RO) membrane filter in accordance with still another embodiment shown in FIG. 8 is the same as that of the reverse osmosis (RO) membrane filter in accordance with one embodiment shown in FIG. 3, except the raw water inlet port 100 for introduction of raw water such as tap water into the guide tube, the purified water outlet port 200 for discharge of the purified water subjected to the purification treatment by the reverse osmosis membrane sheet 55, and the concentrated water outlet port 300 for discharge of the concentrated water filtered by the reverse osmosis membrane sheet 55, which are respectively formed at the upper portion of the filter hosing 56. Thus, the detailed description thereof will be omitted to avoid redundancy.

Thus, the raw water introduced into the upper end of the reverse osmosis membrane sheet 55 through raw water inlet port 100 is fed in the vertical direction on the drawing sheet along the guide tube 54. In this case, the raw water flowing in the guide tube 54 and the concentrated water flowing out of the reverse osmosis membrane sheet 55 can be prevented from being mixed with each other.

The raw water fed along the guide tube 54 is supplied to the reverse osmosis membrane sheet 55 along the raw water outflow holes 53. For this reason, the purified water which has been subjected to the purification treatment by the reverse osmosis membrane sheet 55 is introduced into and collected in the central tube 51 through the purified water inflow holes. The purified water collected in the central tube 51 is fed in an upward direction on the drawing sheet and is discharged to the outside through the purified water outlet port 200.

On the other hand, concentrated water which has not passed through the reverse osmosis membrane sheet 55 is fed in the upward direction on the drawing sheet along a passage defined between the reverse osmosis membrane sheet 55 and the filter housing 56 and is discharged to the outside through the concentrated water outlet port 300. In this case, the raw water fed in the vertical direction along the guide tube 54 by the lower holder B and the concentrated water flowing out of the reverse osmosis membrane sheet 55 can be prevented from being mixed with each other.

### INDUSTRIAL APPLICABILITY

In accordance with the present disclosure having the configuration as described above, the residence time of raw water in a reverse osmosis membrane sheet can be extended by allowing the raw water to flow in a longitudinal direction of the reverse osmosis membrane sheet, thus leading to an increase in the throughput of purified water.

While the present invention has been described in connection with the specific embodiments illustrated in the drawings, they are merely illustrative, and the invention is not limited to these embodiments. It is to be understood that various equivalent modifications and variations of the embodiments can be made by a person having an ordinary skill in the art without departing from the spirit and scope of the present invention. Therefore, the true technical scope of the present invention should not be defined by the above-mentioned embodiments but should be defined by the appended claims and equivalents thereof.

## Claims

1. A reverse osmosis (RO) membrane filter having a flow channel formed on a side surface thereof, the filter comprising:
a central tube including one or more purified water inflow holes radially formed therein to allow purified water to be introduced into the central tube through the purified water inflow holes, the central tube being closed at one end thereof;
a guide tube coupled to an outer portion of the central tube, the guide tube including a raw water feed passage formed in the longitudinal direction thereof and one or more raw water outflow holes radially formed therein so as to fluidically communicate with the raw water feed passage;
a reverse osmosis membrane sheet configured to filter a foreign substance contained in raw water by allowing the raw water to flow in the longitudinal direction thereof in order to extend the residence time of the raw water passing through the raw water outflow holes, and configured to allow the filtered and purified water to be supplied to the inside of the central tube through the purified water inflow holes; and
a filter housing configured to accommodate the reverse osmosis membrane sheet therein.

2. A reverse osmosis (RO) membrane filter having a flow channel formed on a side surface thereof, the filter comprising:
a central tube including one or more purified water inflow holes radially formed therein to allow purified water to be introduced into the central tube through the purified water inflow holes, the central tube being closed at one end thereof;
a guide tube coupled to an outer portion of the central tube and including one or more ribs radially protrudingly formed on the outer circumferential surface thereof in the longitudinal direction thereof so as to be spaced apart from each other at regular intervals in order to define a raw water feed passage;
a reverse osmosis membrane sheet configured to filter a foreign substance contained in raw water by allowing the raw water to flow in the longitudinal direction thereof in order to extend the residence time of the raw water passing through the raw water outflow holes, and configured to allow the filtered and purified water to be supplied to the inside of the central tube through the purified water inflow holes; and
a filter housing configured to accommodate the reverse osmosis membrane sheet therein.

3. A reverse osmosis (RO) membrane filter having a flow channel formed on a side surface thereof, the filter comprising:
a central tube including one or more purified water inflow holes radially formed therein to allow purified water to be introduced into the central tube through the purified water inflow holes, the central tube being closed at one end thereof;
a guide tube coupled to an outer portion of the central tube, the guide tube including a raw water feed passage formed in the longitudinal direction thereof and one or more raw water outflow holes radially formed therein so as to fluidically communicate with the raw water feed passage;
a reverse osmosis membrane sheet configured to filter a foreign substance contained in raw water by allowing the raw water to flow in the longitudinal direction thereof in order to extend the residence time of the raw water passing through the raw water outflow holes, and configured to allow the filtered and purified water to be supplied to the inside of the central tube through the purified water inflow holes; and
a filter housing including a raw water inlet port formed at an upper portion thereof to allow the raw water such as tap water to be introduced into the guide tube through the raw water inlet port, a purified water outlet port formed at the upper portion thereof to allow the purified water subjected to a purification treatment by the reverse osmosis membrane sheet to be discharged to the outside from the central tube through the purified water outlet port, and a concentrated water outlet port formed at the upper portion thereof to allow concentrated water filtered by the reverse osmosis membrane sheet to be discharged to the outside through the concentrated water outlet port, the filter housing being configured to accommodate the reverse osmosis membrane sheet therein.

4. The reverse osmosis (RO) membrane filter according to claim 1 or 2, wherein the central tube is disposed at the center or peripheral portion of the reverse osmosis membrane sheet in the longitudinal direction of the reverse osmosis membrane sheet.

5. The reverse osmosis (RO) membrane filter according to claim 1 or 2, wherein the central tube and the guide tube are formed integrally with each other.

6. The reverse osmosis (RO) membrane filter according to any one of claims 1 to 3, wherein the reverse osmosis membrane sheet comprises:
an upper holder mounted at an upper end thereof and configured to prevent the raw water introduced into the upper end of the reverse osmosis membrane sheet through the raw water inlet port and the concentrated water fed from the reverse osmosis membrane sheet to the concentrated water outlet port from being mixed with each other; and
a lower holder mounted at a lower end thereof and configured to prevent the raw water introduced into the lower end of the reverse osmosis membrane sheet after passing through a lower end of the guide tube and the concentrated water discharged from the reverse osmosis membrane sheet from being mixed with each other.

7. The reverse osmosis (RO) membrane filter according to claim 1, further comprising a flow channel conversion guide coupled to an opening of the filter housing, the flow channel conversion guide including a raw water inlet port formed therein to allow the raw water to be introduced into the guide tube through the raw water inlet port, a purified water outlet port formed therein to allow the purified water to be discharged to the outside from the central tube through the purified water outlet port, and a concentrated water outlet port formed therein to allow concentrated water filtered by the reverse osmosis membrane sheet to be discharged to the outside through the concentrated water outlet port.

8. The reverse osmosis (RO) membrane filter according to claim 2, further comprising a flow channel conversion guide coupled to an opening of the filter housing, the flow channel conversion guide including a raw water inlet port formed therein to allow the raw water to be introduced into the guide tube through the raw water inlet port, a purified water outlet port 58 formed therein to allow the purified water to be discharged to the outside from the central tube through the purified water outlet port, and a concentrated water outlet port formed therein to allow concentrated water filtered by the reverse osmosis membrane sheet to be discharged to the outside through the concentrated water outlet port.
